## Europäisches Patentamt
## European Patent Office
## Office européen des brevets

(19)

(11) Veröffentlichungsnummer: **0 206 007**
**B1**

(12)

# EUROPÄISCHE PATENTSCHRIFT

(45) Veröffentlichungstag der Patentschrift: **10.10.90**

(51) Int. Cl.⁵: **C 23 C 22/74, H 01 F 1/18**

(21) Anmeldenummer: **86107475.5**

(22) Anmeldetag: **02.06.86**

(54) Verfahren zur Herstellung eines Elektroblechs mit einer elektrisch isolierenden Beschichtung und das so hergestellte beschichtete Elektroblech.

(30) Priorität: **05.06.85 DE 3520090**

(43) Veröffentlichungstag der Anmeldung:
**30.12.86 Patentblatt 86/52**

(45) Bekanntmachung des Hinweises auf die Patenterteilung:
**10.10.90 Patentblatt 90/41**

(84) Benannte Vertragsstaaten:
**AT BE CH DE FR GB IT LI LU NL SE**

(56) Entgegenhaltungen:
DE-A-2 146 344
DE-A-2 546 190
FR-A-2 302 578

PATENT ABSTRACTS OF JAPAN, Band 7, Nr. 222 (E-201)1367r, 4. Oktober 1983; & JP-A-58 112 303 (KAWASAKI SEITETSU K.K.) 04-07-1983

(73) Patentinhaber: **Stahlwerke Bochum AG**
**Castroper Strasse 228**
**D-4630 Bochum (DE)**

(72) Erfinder: **Patzer, Günter**
**Bürgerstrasse 8**
**D-4200 Oberhausen 1 (DE)**
Erfinder: **Spirres, Karl-Heinz**
**Teutoburger Strasse 51a**
**D-4200 Oberhausen 11 (DE)**

(74) Vertreter: **Cohausz & Florack Patentanwälte**
**Postfach 14 01 20 Schumannstrasse 97**
**D-4000 Düsseldorf 1 (DE)**

**EP 0 206 007 B1**

**Beschreibung**

Die Erfindung bezieht sich auf ein Verfahren zur Herstellung eines Elektroblechs mit einer elektrisch isolierenden einseitigen oder zweiseitigen Beschichtung aus organischen Bestandteilen und anorganischen Bestandteilen in Form von Phosphaten von Metallen aus mindestens einer der ersten drei Hauptgruppen des Periodischen Systems der Elemente, die hartelastisch, lösungsmittelfest, hitze- und glühbeständig ist, wobei das so beschichtete Elektroblech gut stanz- und schweißbar ist.

Die an die Schweißbarkeit zu stellenden besonderen Bedingungen ergeben sich aus der Verwendung spezieller Schweißverfahren beim späteren Zusammenschweißen der Elektrobleche und sind insbesondere in den in diesem Zusammenhang zu berücksichtigenden Parametern zu sehen, wie beispielsweise dem Anpreßdruck der Paketpackung, der Stromstärke und der Geschwindigkeit, mit der die Elektrobleche in Stapelrichtung verschweißt werden und die im allgemeinen in der Größenordnung zwischen 750 und 1250 mm je Minute liegt.

Es gibt zahlreiche unterschiedliche Isolierbeschichtungen für Elektrobleche. Zu diesen gehören insbesondere Beschichtungen als rein anorganische Produkte und Beschichtungen, die außer anorganischen Bestandteilen auch organische Bestandteile enthalten, zu deren Bestandteilen jedoch auch Chrom-VI-Verbindungen gehören DE—OS 30 05 538 und DE—OS 25 46 190, deren Nachteile allgemein in folgendem zu sehen sind:

Hinsichtlich der Zusammensetzung dieser Beschichtungen ist der Gehalt an Chrom-Verbindungen nachteilig, da diese in starkem Maße als kanzerogen anzusehen sind, wenn sie staubförmige auftreten und in dieser Form eingeatmet werden können. Sowohl bei der Herstellung derartiger Beschichtungen als auch unter Umständen bei der Bearbeitung der mit diesen Beschichtungen versehenen Elektrobleche können entsprechende Stäube entstehen. Außerdem ist die Entsorgung chromhaltiger Abwässer, die z.B. aus der Reinigung der Anlagen entstehen, besonders problematisch und erfordert Sondermaßnahmen von beträchtlichem Aufwand.

Hinsichtlich der Zusammensetzung ist es ferner nachteilig, daß die bekannten Beschichtungen im pH-Bereich zwischen 1 und 6 liegen und es wegen ihres sauren Charakters erforderlich machen, daß eine Verarbeitung dieser Beschichtungen nur unter gleichzeitiger Anwendung von Schutzmaßnahmen erfolgen kann, wenn diese Maschinen, was allgemein der Fall sein wird, aus Eisen bestehen.

Auch hinsichtlich der gewünschten Eigenschaften sind die bekannten Beschichtungen nicht in der gewünschten Gesamtheit optimal. Zu den Eigenschaften, die für derartige Elektrobleche von besonderer Wichtigkeit sind, gehören Stanzbarkeit, Haftung und Elastizität, möglichst geringe Thermoplastizität sowie Schweißbarkeit, wobei natürlich das elektrische Isolationsvermögen zu den wichtigsten Voraussetzungen gehört. Wenn beispielsweise eine der bekannten Beschichtungen eine besonders gute Stanzbarkeit oder hinsichtlich einer der anderen wünschenswerten Eigenschaften eine besonders gute Qualität aufweist, könnte sich hinsichtlich anderer Eigenschaften eine Qualitätsverringerung einstellen, Z.B. könnte eine optimale elektrische Isolierfähigkeit oder eine besonders hohe Hitzebständigkeit zu Lasten der Schweißbarkeit gehen.

Bei einer anderen bekannten elektrisch isolierenden Beschichtung (DE—AS 12 46 071) werden wässrige Dispersionen von Kunststoffen oder kunststoffähnlichen Naturprodukten verwendet. Hierbei handelt es sich um sehr saure Produkte, hervorgerufen durch die Anwesenheit von Phosphorsäure bzw. ihrer sauren Salze. Der Nachteil solcher aus dispersen Mischungen und Lösungen saurer Phosphate und organischer polymeren Verbindungen bestehenden flüssigen Beschichtungen liegt einerseits in der Instabilität bei der Lagerung der flüssigen Beschichtung selbst und andererseits in dem korrosiven Verhalten der Beschichtung gegenüber Elektroblechen und den Verarbeitungsmaschinen zur Beschichtung von Elektroblechen. Ferner ist von Nachteil, daß durch Verwendung von organischen Polymeren, wie Polyvinylpropionat, Polyvinylacetat und anderer Polyvinylverbindungen, mit einer erhöhten Thermoplastizität bei Temperaturbelastung zu rechnen ist. Bei Verschweißungen derartiger Bleche können schließlich vor allem in Verbindung mit Chlorkautschuk Vinylchloridspaltprodukte entstehen, die kanzerogen sind.

Hiervon ausgehend war es Aufgabe der vorliegenden Erfindung, ein Elektroblech der eingangs genannten Art mit einfachen Mitteln dahingehend zu verbessern, daß sich die obengenannten Eigenschaften jeweils in optimalem Ausmaß in einer derartigen Beschichtung vereinigen lassen, wobei diese Beschichtung von Chrom-VI-Verbindungen frei sein soll.

Zur Lösung dieser Aufgabe wird erfindungsgemäß vorgeschlagen, daß das Elektrobleche mit einem Gemisch folgender Zusammensetzung beschichtet wird:

a) 15 bis 45 Massen-% eines ersten wasserverdünnbaren Produktes von einem Kondensationsprodukt aus mindestens einem Polyalkohol, mindestens einer Polycarbonsäure und mindestens einer Monocarbonsäure;

b) 2,5 bis 22,5 Massen-% eines zweiten wasserverdünnbaren Kondensationsproduktes aus einer heterocyclischen Ringverbindung oder Harnstoff jeweils mit Formaldehyd;

c) 9 bis 30 Massen-% mindestens eines Metallphosphats, dessen Kation das eines Metalls aus einer der ersten drei Hauptgruppen des Periodischen Systems der Elemente ist;

d) 1,7 bis 8,2 Massen-% eines Amins; und

e) 0,2 bis 3,8 Massen-% eines amphoteren Tensids und das so beschichtete Blech auf eine genügend

2

erhöhte Temperatur für eine genügend lange Zeit derart erhitzt wird, so daß sich flüchtige Bestandteile verflüchtigen und vorhandene organische Bestandteile aushärten. Das Erhitzen geschieht vorzugsweise bei einer Temperatur im Bereich von 220—450°C für 10 bis 150 Sekunden, ganz besonders bevorzugt bei einer Temperatur im Bereich von 280—400°C für 20 bis 60 Sekunden.

Die so hergestellte Beschichtung hat nicht nur den Vorteil der vollständigen Freiheit von Chrom-VI-Verbindung, sondern noch weitere Vorteile, wie bessere Handhabbarkeit und bessere Verarbeitbarkeit (besseres Schweißverhalten) und keine Korrosionsgefahr. Ferner sind die erfindungsgemäßen Elektrobleche, aufgrund der Qualität ihrer Beschichtung mit überaus hoher Geschwindigkeit, z.B. mit 1250 mm/min oder mehr, im Argonarc-Verfahren schweißbar, ohne daß eine Lunkerbildung in der Schweißraupe befürchtet werden muß oder die Standzeit der Schweißelektroden herabgesetzt wird.

Es hat sich ferner herausgestellt, daß die Beschichtung eine nahezu absolute Lösungsmittelbeständigkeit hat, und zwar insbesondere auch gegen als Kühlmittel dienende halogenierte Kohlenwasserstoffe, was für manche Anwendungsbereiche unverzichtbar ist.

Besonders charakteristisch für das als Ausgangsgemisch einzusetzende wäßrige Gemisch ist es, daß sich ein pH-Wert im Bereich zwischen 8,0 und 9,5 ergibt bzw. erreichen läßt. Das wäßrige Gemisch bzw. das Beschichtungsmittel und auch die erhaltene Beschichtung ist also basisch, so daß bei der Verarbeitung der Elektrobleche auf metallischen Maschinen keine zusätzlichen Schutzmaßnahmen erforderlich sind, um eine Korrosion zu verhindern.

Als vorteilhaft hat sich ferner eine nur äußert geringfügige Rußbildung, beispielsweise beim Schweißen, herausgestellt. Auch gewährleistet die Qualität der Beschichtung bei den erfindungsgemäßen Magnetblechen ein überaus kleines Schrumpfmaß der aus diesen Magnetblechen hergestellten Blechpakete. Bei einer thermischen Belastung von beispielsweise 175°C und einem Druck von 300 N/cm² für ein Zeit von 10 Stunden liegt das Schrumpfmaß sogar unter 0,3% (Stärke der Beschichtung: 5 µm).

Das Kondensationsprodukt im Produkt gemäß a) und das Kondensationsprodukt gemäß b) und ihr Mengenverhältnis zueinander sind maßgeblich für die Geschwindigkeit der Aushärtung bei höherer Temperatur, die Haftung auf dem Magnetblech, eine geringe restliche Thermoplastizität und die Lösungsmittelbeständigkeit, insbesondere gegen als Kühlmittel dienende halogenierte Kohlenwasserstoffe. Der akalisch wirkende Stoff, nämlich das Amin, insbesondere als tertiäres Amin, begründet die Wasserverträglichkeit der organischen Bestandteile.

Die Phosphate von Metallen aus den ersten drei Hauptgruppen des Periodischen Systems der Elemente bewirken eine feste Bindung der Beschichtungsbestandteile auch nach dem Glühen sowie eine gute Haftung der Beschichtung und die Qualität der Isoliereigenschaften nach Abschluß des Glühvorganges.

Die Erfindung betrifft auch das so hergestellte beschichtete Elektroblech.

Vorteilhafte Ausgestaltungen der Erfindung sind in den Unteransprüchen gekennzeichnet. Nachfolgend werden von diesen Ausgestaltungen einige besonders abgehandelt.

Für die Elastizität und Haftung ist der Anteil des ersten wasserverdünnbaren Produktes aus dem Kondensationsprodukt in dem wäßrigen Gemisch wesentlich. Der Anteil ist 15 bis 45 Massen-%. Ein kleinerer Anteil würde zu einer Verringerung der Elastizität und der Haftung führen, während ein höherer Anteil die Aushärtungsgeschwindigkeit der Beschichtung nachteilig beeinflussen würde.

Vorzugsweise handelt es sich bei den im ersten Kondensationsprodukt des ersten wasserverdünnbaren Produktes eingesetzten Polycarbonsäuren um Dicarbonsäuren.

Zur Verbesserung der Elastizität der Beschichtung und ihrer Haftung ist es vorteilhaft, wenn die Monocarbonsäure in dem Kondensationsprodukt des ersten wasserverdünnbaren Produkts mit einem Anteil von etwa 10 bis 20 Massen-% mit einer Kettenlänge zwischen $C_{16}$ und $C_{18}$ enthalten ist.

Vorzugsweise sollte das zweite Kondensationsprodukt eine Triazin-Verbindung sein, die vorteilhaft veräthert werden kann. Bewährt hat sich besonders Melamin. Gute Ergebnisse wurden erzielt, wenn das zweite Kondensationsprodukt in dem flüssigen Ausgangsgemisch einen Anteil von 2,5 bis 22,5 Massen-% ausmacht. Wenn dieser Anteil kleiner ist, geht das zu Lasten der Reaktionsgeschwindigkeit beim Aushärten, während bei einem größeren Anteil die Beschichtung zu hart und zu spröde wird, was zu einer Verringerung der Haftung und damit der Stanzbarkeit führt.

Beispiel 1
Komponente A
(in Massen-%)

| | |
|---|---|
| 18,5—22,5 | wasserverdünnbares Polyesterharz, gelöst in Isopropanol 75%-ig |
| 10—13 | wasserverdünnbares nichtplastifiziertes Melaminharz, gelöst in Isopropanol 63%-ig |
| 3—5 | tertiärer Aminoalkohol |
| 14—18 | Polycalciumphosphat |
| 1,5—2,5 | Natrium-Äthoxylat, niedermolekular |
| 41—25 | Wasser als Rest einschließlich |

# EP 0 206 007 B1

Komponente B
(in Massen-%)

| | |
|---|---|
| 12—14 | Natriumpolyphosphat mittlerer Kettenlänge 50%-ig in ammoniakalischer wässriger Lösung pH=9,5 |

Vor der Verarbeitung Mischen der Komponente A+B Beispiel 2
Komponente A
(in Massen-%)

| | |
|---|---|
| 18,5—22,5 | wasserverdünnbares Polyesterharz, gelöst in Isopropanol 75%-ig |
| 10—13 | wasserverdünnbares nichtplastifiziertes Melaminharz, gelöst in Isopropanol 63%-ig |
| 3—5 | tertiärer Aminoalkohol |
| 10—12 | Polycalciumphosphat |
| 4—6 | Aluminiumphosphat |
| 1,5—2,5 | Natrium-Äthoxylat, niedermolekular |
| 41—25 | Wasser als Rest einschließlich |

Komponente B
(in Massen-%)

| | |
|---|---|
| 12—14 | Natriumpolyphosphat mittlerer Kettenlänge 50%-ig in ammoniakalischer wässriger Lösung pH=9,5 |

Vor der Verarbeitung Mischen der Komponenten A+B

Die Herstellung eines derartigen Elektroblechs wird im allgemeinen in folgender Weise vor sich gehen:

Das in der beschriebenen Weise zusammengesetzte wäßrige Gemisch wird im coil-coating-Verfahren auf bandförmiges Elektroblech aufgebracht. Das Blechband durchläuft anschließend einen Tunnelofen mit einer Umluft-Temperatur von 280 bsi 400°C. Da das auf das erfindungsgemäße Elektroblech aufgebrachte Gemisch unter anderem auch eine schnelle Aushärtung gewährleistet, genügt eine verhältnismäßig kurze Aushärtungszeit in der Größenordnung von 20—60 s.

Anschließend wird das Elektroblech mit Luft oder Wasser gekühlt und wieder aufgespult, so daß die Seiten der Bandrollen besäumt bzw. in der gewünschten Weise bearbeitet werden können. Erforderlichenfalls wird das Blechband auch noch in Längsrichtung gespalten, so daß sich entsprechend schmälere Bandrollen ergeben.

Die weiteren Bearbeitungsvorgänge hängen in noch stärkerem Maße von der jeweils für die Elektrobleche vorgesehenen Anwendung ab. In jedem Fall erfolgt jedoch das Herstellen der einzelnen Elektrobleche in der jeweils gewünschten Form durch Stanzen. Anschließend werden die Elektrobleche zu Paketen gestapelt, zusammengepreßt und zusammengeschweißt, vernietet oder verschraubt.

Im übrigen ergeben sich im Rahmen der beschriebenen Herstellung folgende Kenndaten, die in ihrer Gesamtheit als überaus günstig anzusehen sind und die kennzeichnend sind für den hohen Standard eines erfindungsgemäß beschichteten Elektrobleches.

Die ausgehärtete Beschichtung hat eine Temperaturbeständigkeit derart, daß sie bei 600°C, die während einer Stunde einwirken, nicht abblättert. Entsprechendes gilt für eine zweistündige Einwirkung von 850°C unter Schutzgas ($H_2/N_2$).

Ferner hat die Beschichtung eine Durchschlagspannung von 60 kV/mm Schichtdicke.

Es kann durchaus zweckmäßig sein, das Ausgangsgemisch nach dem Zweikomponentenprinzip herzustellen, d.h. eine den organischen Bestandteil enthaltende Komponente und eine den anorganischen Bestandteil enthaltende Komponente bis zu einem Zeitpunkt getrennt zu halten, zu dem die Verwendung des flüssigen Gemischs bevorsteht, und die Komponenten erste verhältnismäßig kurze Zeit vor der Verwendung miteinander zu vermischen.

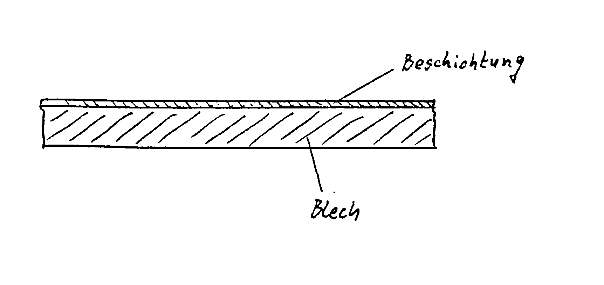

**Patentansprüche**

1. Verfahren zur Herstellung von gut verarbeitbarem Elektroblech mit einer elektrisch isolierenden, einseitigen oder zweiseitigen Beschichtung durch Beschichten des Blechs mit einem wäßrigen, ein Tensid, organische Bestandteile und anorganische Bestandteile in Form von Metallphosphaten enthaltenden Gemisch und Erhitzen des so beschichteten Elektroblechs auf eine genügend erhöhte Temperatur für eine genügend lange Zeit derart, daß die gewünschte chemische Reaktion zwischen den Bestandteilen des wäßrigen Gemischs und die Entfernung von Wasser und gegebenenfalls vorhandenen Lösungsmitteln eintritt, dadurch gekennzeichnet, daß das wäßrige Gemisch neben Wasser folgende Komponenten enthält:

a) 15 bis 45 Massen-% eines ersten wasserverdünnbaren Produktes eines Kondensationsproduktes aus mindestens einem Polyalkohol, mindestens einer Polycarbonsäure und mindestens einer Monocarbonsäure;

4

b) 2,5 bis 22,5 Massen-% eines zweiten wasserverdünnbaren Kondensationsproduktes aus einer heterocyclischen Ringverbindung oder Harnstoff jeweils mit Formaldehyd;

c) 9 bis 30 Massen-% mindestens eines Metallphosphats, dessen Kation das eines Metalls aus einer der ersten drei Hauptgruppen des Periodischen Systems der Elemente ist;

d) 1,7 bis 8,2 Massen-% eines Amins und

e) 0,2 bis 3,8 Massen-% eines amphoteren Tensids.

2. Verfahren nach Anspruch 1, dadurch gekennzeichnet, daß die Monocarbonsäure mit einem Anteil von etwa 10 bis 20 Massen-% mit einer Kettenlänge zwischen $C_{16}$ und $C_{18}$ im Kondensationsprodukt des ersten wasserverdünnbaren Produktes enthalten ist.

3. Verfahren nach Anspruch 1 oder 2, dadurch gekennzeichnet, daß die Polycarbonsäure eine Dicarbonsäure ist.

4. Verfahren nach einem der Ansprüche 1 bis 3, dadurch gekennzeichnet, daß das zweite Kondensationsprodukt eine Triazin-Verbindung ist.

5. Verfahren nach Anspruch 4, dadurch gekennzeichnet, daß die Triazin-Verbindung Melamin ist.

6. Verfahren nach Anspruch 4, dadurch gekennzeichnet, daß die Triazin-Verbindung veräthert ist.

7. Verfahren nach einem der Ansprüche 1 bis 6, dadurch gekennzeichnet, daß das Amin ein tertiäres Amin ist.

8. Verfahren nach Anspruch 7, dadurch gekennzeichnet, daß das tertiäre Amin ein Aminoalkohol ist.

9. Verfahren nach Anspruch 7 oder 8, dadurch gekennzeichnet, daß das tertiäre Amin in dem flüssigen Gemisch mit einem Anteil zwischen 3 und 5 Massen-% enthalten ist.

10. Verfahren nach einem der Ansprüche 1 bis 9, dadurch gekennzeichnet, daß das oder die Metallphosphate ketten- oder ringförmige, glasbildende mineralische Substanzen sind.

11. Verfahren nach Anspruch 10, dadurch gekennzeichnet, daß das oder die Metallphosphate ein Aluminium-, Lithium-, Calcium- oder Natriumphosphat ist bzw. sind.

12. Verfahren nach einem der Ansprüche 1 bis 11, dadurch gekennzeichnet, daß die Metallphosphate in dem wäßrigen Gemisch mit einem Anteil zwischen 20 und 25 Massen-% enthalten sind.

13. Verfahren nach einem der Ansprüche 1 bis 12, dadurch gekennzeichnet, daß das wasserverdünnbare Produkt des ersten Kondensationsproduktes und das zweite Kondensationsprodukt in einem mit Wasser mischbaren organischen Lösungsmittel gelöst sind.

14. Verfahren nach Anspruch 13, dadurch gekennzeichnet, daß das mit Wasser mischbare organische Lösungsmittel Isopropylalkohol ist.

15. Verfahren nach Anspruch 13 oder 14, dadurch gekennzeichnet, daß das mit Wasser mischbare organische Lösungsmittel in dem wäßrigen Gemisch mit einem Anteil zwischen 5 und 18 Massen-%, bezogen auf das Gesamtgewicht des wäßrigen Gemisches, enthalten ist.

16. Verfahren nach einem der Ansprüche 1 bis 15, dadurch gekennzeichnet, daß das amphotere Tensid ein Alkalisalz eines Äthoxylates ist.

17. Gut verarbeitbares Elektroblech mit einer elektrisch isolierenden, einseitigen oder zweiseitigen Beschichtung, dadurch gekennzeichnet, daß es nach einem der Ansprüche 1 bis 16 erhalten wurde.

## Revendications

1. Procédé pour fabriquer une tôle électrique facilement usinable avec un revêtement électriquement isolant, sur une face ou sur les deux faces, en effectuant sur la tôle un revêtement avec un mélange aqueux comportant un agent tensio-actif, des composants organiques et des composants minéraux sous forme de phosphates métalliques, et en chauffant la tôle électrique ainsi revêtue à une température assez élevée et pendant un temps assez long pour que puisse se produire la réaction chimique souhaitée entre les constituants du mélange aqueux et l'élimination de l'eau et des solvants éventuellement présents, ce procédé étant caractérisé en ce que le mélange aqueux comporte les composants suivants, en plus de l'eau:

a) de 15 à 45% en poids d'un premier produit diluable dans l'eau d'un produit de condensation d'au moins un polyalcool, d'au moins un acide polycarboxylique et d'au moins un acide monocarboxylique;

b) de 2,5 à 22,5% en poids d'un deuxième produit de condensation, diluable dans l'eau, d'un composé hétérocyclique ou d'urée, avec, chaque fois, du formaldéhyde;

c) de 9 à 30% en poids d'au moins un phosphate métallique, dont le cation est celui d'un métal choisi parmi un des trois premiers groupes principaux de la classification périodique des éléments;

d) de 1,7 à 8,2% en poids d'une amine; et

e) de 0,2 à 3,8% en poids d'un agent tensio-actif amphotère.

2. Procédé selon la revendication 1, caractérisé en ce que l'acide monocarboxylique, dans le produit de condensation correspondant au premier produit diluable dans l'eau, représente une teneur de 10 à 20% en poids, cet acide ayant une longueur de chaîne comprise entre $C_{16}$ et $C_{18}$.

3. Procédé selon l'une des revendications 1 ou 2, caractérisé en ce que l'acide polycarboxylique est un diacide.

4. Procédé selon l'une des revendications 1 à 3, caractérisé en ce que le deuxième produit de condensation est un composé de la triazine.

5. Procédé selon la revendication 4, caractérisé en ce que le composé de la triazine est la mélamine.

# EP 0 206 007 B1

6. Procédé selon la revendication 4, caractérisé en ce que le composé de triazine est éthérifié.

7. Procédé selon l'une des revendications 1 à 6, caractérisé en ce que l'amine est une amine tertiaire.

8. Procédé selon la revendication 7, caractérisé en ce que l'amine tertiaire est un aminoalcool.

9. Procédé selon la revendication 7 ou 8, caractérisé en ce que l'amine tertiaire se trouve dans le mélange liquide avec une teneur variant de 3 à 5% en poids.

10. Procédé selon l'une des revendications 1 à 9, caractérisé en ce que le ou les phosphates métalliques sont des substances minérales vitreuses en forme de chaînes ou de cycles.

11. Procédé selon la revendication 10, caractérisé en ce que le ou les phosphates métalliques est ou sont un ou des phosphates d'aluminium, de lithium, de calcium ou de sodium.

12. Procédé selon l'une des revendications 1 à 11, caractérisé en ce que les phosphates métalliques sont présents dans le mélange aqueux avec une teneur comprise entre 20 et 25% en poids.

13. Procédé selon l'une des revendications 1 à 12, caractérisé en ce que le produit diluable dans l'eau du premier produit de condensation, et le deuxième produit de condensation, sont dissous dans un solvant organique miscible à l'eau.

14. Procédé selon la revendication 13, caractérisé en ce que le solvant organique miscible à l'eau est l'alcool isopropylique.

15. Procédé selon l'une des revendications 13 ou 14, caractérisé en ce que le solvant organique miscible à l'eau est contenu dans le mélange aqueux avec une teneur comprise entre 5 et 18% en poids, par rapport au poids total du mélange aqueux.

16. Procédé selon l'une des revendications 1 à 15, caractérisé en ce que l'agent tensio-actif amphotère est un sel alcalin d'un éthoxylate.

17. Tôle métallique facilement usinable comportant un revêtement électriquement isolant, sur une face ou sur les deux faces, caractérisée en ce qu'elle a été obtenue selon le procédé conforme à l'une des revendications 1 à 16.

## Claims

1. Process for making readily processable electrical steel sheet with an electrically insulating, one-sided or two-sided coating by coating the steel sheet with an aqueous mixture containing a surfactant, organic constituents and inorganic constituents in the form of metal phosphates and heating the electrical steel sheet thus coated to a sufficiently high temperature for a sufficiently long time in such a way that the desired chemical reaction between the constituents of the aqueous mixture and the removal of water and any solvents present take place, characterized in that the aqueous mixture contains, in addition to water, the following components:

a) 15 to 45% by mass of a first water-dilutable product of a condensation product obtained from at least one polyalcohol, at least one carboxylic acid and at least one monocarboxylic acid,

b) 2.5 to 22.5% by mass of a second water-dilutable condensation product obtained from a heterocyclic ring compound or urea with formaldehyde in each case,

c) 9 to 30% by mass of at least one metal phosphate, the cation of which is that of a metal from one of the first three main groups of the periodic table of the elements,

d) 1.7 to 8.2% by mass of an amine, and

e) 0.2 to 3.8% by mass of an amphoteric surfactant.

2. Process according to Claim 1, characterized in that the monocarboxylic acid is present in the condensation product of the first water-dilutable product in a proportion of about 10 to 20% by mass and with a chain length between $C_{16}$ and $C_{18}$.

3. Process according to Claim 1 or 2, characterized in that the polycarboxylic acid is a dicarboxylic acid.

4. Process according to one of Claims 1 to 3, characterized in that the second condensation product is a triazine compound.

5. Process according to Claim 4, characterized in that the triazine compound is melamine.

6. Process according to Claim 4, characterized in that the triazine compound is etherified.

7. Process according to one of Claims 1 to 6, characterized in that the amine is a teritary amine.

8. Process according to Claim 7, characterized in that the tertiary amine is an amino alcohol.

9. Process according to Claim 7 or 8, characterized in that the tertiary amine is present in the liquid mixture in a proportion of between 3 and 5% by mass.

10. Process according to one of Claims 1 to 9, characterized in that the metal phosphate or metal phosphates are linear or cyclic, glass-forming mineral substances.

11. Process according to Claim 10, characterized in that the metal phosphate or phosphates is or are an aluminium phosphate, lithium phosphate, calcium phosphate or sodium phosphate.

12. Process according to one of Claims 1 to 11, characterized in that the metal phosphates are present in the aqueous mixture in a proportion of between 20 and 25% by mass.

13. Process according to one of Claims 1 to 12, characterized in that the water-dilutable product of the first condensation product and the second condensation product are dissolved in a water-miscible organic solvent.

14. Process according to Claim 13, characterized in that the water-miscible organic solvent is isopropyl alcohol.

15. Process according to Claim 13 or 14, characterized in that the water-miscible organic solvent is present in the aqueous mixture in a proportion of between 5 and 18% by mass, relative to the total weight of the aqueous mixture.

16. Process according to one of Claims 1 to 15, characterized in that the amphoteric surfactant is an alkali metal salt of an ethoxylate.

17. Readily processable electrical steel sheet with an electrically insulating, one-sided or two-sided coating, characterized in that it was obtained according to one of Claims 1 to 16.

1

Beschichtung

Blech